(19) Europäisches Patentamt
European Patent Office
Office européen des brevets

(11) **EP 4 628 446 B1**

(12) **EUROPEAN PATENT SPECIFICATION**

(45) Date of publication and mention
of the grant of the patent:
**29.07.2026  Bulletin 2026/31**

(21) Application number: **24201646.7**

(22) Date of filing: **20.09.2024**

(51) International Patent Classification (IPC):
*C01B 3/26* (2006.01)        *C01B 32/05* (2017.01)
*C01B 32/312* (2017.01)      *C01B 32/33* (2017.01)
*C21B 13/00* (2006.01)       *C21C 7/00* (2006.01)
*C22B 1/24* (2006.01)

(52) Cooperative Patent Classification (CPC):
**C01B 3/26; C01B 32/05; C01B 32/312;
C01B 32/33; C21B 13/0013; C21B 13/0066;
C21C 7/0025; C22B 1/24; C22B 1/2406;
Y02P 10/143**

(54) **RECARBURIZER, METHOD OF PRODUCING THE SAME, AND STEEL-MAKING PROCESS**

AUFKOHLUNGSMITTEL, VERFAHREN ZU SEINER HERSTELLUNG SOWIE
STAHLHERSTELLUNGSVERFAHREN

RECARBURANT, PROCÉDÉ DE FABRICATION DU MÊME, ET PROCÉDÉ D'ÉLABORATION DE
L'ACIER

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **05.04.2024  KR 20240046323**

(43) Date of publication of application:
**08.10.2025  Bulletin 2025/41**

(73) Proprietor: **SK Innovation Co., Ltd.
Seoul 03188 (KR)**

(72) Inventors:
• **JANG, Jung Geun
  34124 Daejeon (KR)**
• **LEE, Seung Ok
  34124 Daejeon (KR)**
• **LEE, Ji Hoon
  34124 Daejeon (KR)**

(74) Representative: **Lorenz Seidler Gossel Part. mbB
Widenmayerstr. 23
80538 München (DE)**

(56) References cited:
**EP-A1- 4 488 227     CN-A- 116 635 329**

**Description**

BACKGROUND OF THE INVENTION

Field of the Invention

The present invention relates to a recarburizer, a process of producing the same, and a steel-making process using said recarburizer. More particularly, the present invention relates to a recarburizer based on a solid, iron-containing carbonaceous product derived from a process of pyrolyzing methane in a methane-containing feedstock in the presence of an iron-based catalyst and a method of producing the same.

Description of the Related Art

In a steel-making process for manufacturing iron from iron oxide, thorough research is ongoing to obtain high-purity iron, increase yield, and raise productivity. In this regard, a recarburizer is an additive added in the process of manufacturing steel by melting iron during the iron- and steel-making process, and serves not only to increase the purity of steel by removing impurities from steel but also to control the strength of iron by supplementing the insufficient carbon content.

Typically, carbon is contained in processed metal products and has a great impact on hardness, strength, thermal properties, etc. When melting scrap iron, which is a main raw material, in an electric steel-making furnace, elemental carbon is absorbed by addition of a recarburizer to the molten metal and is uniformly distributed throughout the metal charge. In particular, the recarburizer assists slag foaming by inducing additional heat generation and steam generation through combustion with active oxygen and ejection of carbon monoxide gas as the carbon bond structure is decomposed at high temperatures to reduce FeO in the slag.

When the recarburizer is used in this way, it is possible to additionally achieve power cost reduction, prevention of peroxidation of molten steel, efficient foaming of molten slag, denitrification, and the like. Generally, carbon-based materials with a high fixed carbon content and a high calorific value are used as recarburizers, and types with low contents of volatile matter, nitrogen, and sulfur are particularly preferred.

Currently, carbon-based recarburizers, such as graphite-based recarburizers, coal-based recarburizers (anthracite, pitch, etc.), coke-based recarburizers, and the like are widely used, but they contain significant amounts of impurities such as moisture, volatile matter, ash, sulfur, etc., which may adversely affect the quality of steel.

Meanwhile, methane is the most abundant compound in natural gas, and accounts for twice the amount of carbon as other known fossil fuel sources. There are known methods for producing high-value substances, especially hydrogen, from methane, such as oxidative or non-oxidative coupling reaction of methane ($CH_4 \rightarrow 1/6C_6H_6 + 9/6H_2$; $CH_4 \rightarrow 1/2C_2H_4 + H_2$), steam reforming reaction of methane ($CH_4 + H_2O \rightarrow CO + 3H_2$), and partial oxidation reaction of methane ($CH_4 + 1/2O_2 \rightarrow CO + 2H_2$) (e.g., Korean Patent Laid-open No. 2018-0113448, and the like). However, these reactions disadvantageously require a large amount of energy input due to highly endothermic reaction characteristics and cause emission of $CO_2$ as a by-product. As an alternative thereto, a process has been developed to produce hydrogen from methane through pyrolysis using a catalyst, for example, an iron oxide ($Fe_2O_3$) catalyst. This reaction route is advantageous in that it does not involve production of carbon dioxide and produces only carbon as a by-product other than hydrogen (e.g., Int. J. Hydrogen Energy, Vol. 18, No. 3, pp. 211-215).

Recently, research has been conducted on ways to utilize solid carbon produced along with hydrogen in pyrolysis of methane (for example, anode materials for secondary batteries, etc.), but components other than carbon (for example, iron components when using iron-based catalysts) are contained, so direct use thereof for high value-added purposes without purification is limited.

EP44882271 A1 relates to a silicon-carbon composite containing carbon derived by catalytic methane pyrolysis and the use thereof. Another method for producing a recarburizer is disclosed in CN 116 635 329 A.

SUMMARY OF THE INVENTION

A goal of the present invention is to provide a method of increasing the value of a carbonaceous product formed during methane pyrolysis.

Another goal of the present invention is to provide a method of producing a recarburizer with quality equal to or higher than that of a commercial product from a carbonaceous product formed during methane pyrolysis using an iron-based catalyst.

Against this background, the invention proposes a method according to claim 1 of producing a recarburizer, and further embodiments of the invention are specified in dependent claims 2-11.

Against the initially rendered background, the present invention further relates to a recarburizer according to claim 12.

Yet further, the present invention proposes a steel-making process according to claim 13.

BRIEF DESCRIPTION OF THE DRAWINGS

The above and other objects, features, and other advantages of the present invention will be more clearly understood from the following detailed description taken in conjunction with the accompanying drawings, in which:

FIG. 1 schematically shows a process of producing a recarburizer using a solid, iron-containing carbonaceous material formed in obtaining hydrogen by pyrolyzing a methane-containing feedstock in the presence of an iron-based catalyst;

FIG. 2 shows an exemplary structure of a rotary kiln reactor applicable to pyrolysis of a methane-containing feedstock;

FIGS. 3A to 3C are a perspective view, a combination of side and plan views, and a front view, respectively, showing a combination of a helix baffle and a lifter (one lifter per pitch combined) on the inner circumferential surface of the tube of a rotary kiln reactor;

FIG. 4 schematically shows a process in which catalyst particles are divided by the lifter in the tube of a rotary kiln reactor with a combination of helix baffle and lifter;

FIGS. 5A to 5C are a perspective view, a combination of side and plan views, and a front view, respectively, showing a combination of a helix baffle and lifters (four lifters per pitch combined) on the inner circumferential surface of the tube of a rotary kiln reactor;

FIGS. 6A to 6C are front views showing various examples of lifter shapes provided in the tube of the rotary kiln reactor;

FIG. 7 is a graph showing methane conversion depending on time on stream (TOS) in methane pyrolysis 1 in Example;

FIG. 8 is a graph showing methane conversion depending on TOS in methane pyrolysis 2 in Example;

FIG. 9 shows a high-resolution transmission electron microscopy (HRTEM) image of a solid, iron-containing carbonaceous material formed by methane pyrolysis (sample 1);

FIG. 10 shows an X-ray diffraction (XRD) pattern of the solid, iron-containing carbonaceous material formed by methane pyrolysis (sample 1);

FIG. 11 is photographs showing a series of processes of manufacturing recarburizer pellets using the solid, iron-containing carbonaceous material formed by methane pyrolysis; and

FIG. 12 is a graph showing results of pore analysis (BET analysis) between recarburizer pellets manufactured using an iron-containing carbonaceous material (sample 1) and a commercial recarburizer.

Fig. 13 is a scheme of an auto-thermal reduction reaction of methane.

DETAILED DESCRIPTION OF THE INVENTION

Terms used herein may be defined as follows.

The term "carbon" or "carbon-based material" may refer to elemental carbon having an arbitrary structure in a broad sense and may be understood as a concept including various forms, such as a graphitic form, an amorphous form (e.g., carbon black and activated carbon), and the like, and may refer to graphitic carbon or a carbon-based material in a narrow sense.

The term "pyrolysis" refers to a reaction in which hydrocarbons are decomposed upon exposure to heat, for example higher than approximately 400°C in the absence of oxygen or oxygen-containing compounds.

The term "conversion" may refer to the number of moles of the feedstock converted into a compound other than the feedstock per unit mole thereof.

The term "selectivity" may refer to the number of moles of a target product per unit mole of the converted feedstock.

The term "pitch" may refer to a distance or spacing between a screw thread and an adjacent screw thread (or a valley and an adjacent valley).

The term "angle of repose" may refer to a maximum inclination angle at which the slope face of a solid may be stabilized (i.e., the steepest angle of descent relative to the horizontal plane on which a solid granular material can be piled without slumping). The angle of repose is an inherent property of a granular material, and each granular material may have a unique angle of repose.

The term "helix angle" may refer to an angle between a tangent to the helix and an axis of the helix.

The term "crystal" or "crystalline" may typically refer to any solid-phase material in which atoms are arranged to have a lattice structure (e.g., a three-dimensional order) and may be specified by diffraction analysis (XRD), nuclear magnetic resonance analysis (NMR), differential scanning calorimetry (DSC), or a combination thereof.

The term "nano-size" may refer to, in at least one dimension, a size within the range of 1 nm to hundreds of nanometers, for example, of 200 nm or less, and for example, of 100 nm or less.

The term "graphite" refers to a material in which graphene layers are bound together by van der Waals force and the distance between adjacent graphene layers is approximately 0.335 nm.

A pore may have an appropriate wall thickness, for example, within the range of 1 to 100 nm, for example 2 to 50 nm, for example 2 to 10 nm.

The term "micropore" may refer to a pore having a pore size (diameter) of less than 2 nm as defined by IUPAC.

The term "mesopore" may refer to a pore having a pore size (diameter) ranging from 2 to 50 nm as defined by IUPAC.

The term "macropore" may refer to a pore having a pore size (diameter) exceeding 50 nm as defined by IUPAC, for example, a pore having a pore size (diameter) within the range of 75 to 1,000 nm, and for example, 80 to 250 nm.

The term "molded product" may refer to an object that is aggregated to have a predetermined shape rather than a powder in a separated form, and the geometric shape of such a molded product may be, for example, a spherical shape (circle or ball shape), a cubic shape (square), an octagonal shape, a hexagonal shape, a honeycomb/beehive shape, an oval shape, an egg shape, a cylindrical shape, a rod shape, a pillow shape, a random shape, combinations thereof, etc.

The term "proximate analysis" may refer to a method of determining the weight percentage (%) of coal components, particularly fixed carbon, moisture, volatile matter, and ash, which may be measured by ASTM D7582. Here, "fixed carbon" is a carbon component that does not volatilize even when heated, and may refer to remaining carbon excluding volatile matter, ash, and moisture. Also, "ash" may refer to inorganic matter remaining when burned at 720°C, and "volatile matter" may refer to a hydrocarbon separated into gas at the decomposition temperature when coal is pyrolyzed in a nitrogen atmosphere at 950°C.

The term "total carbon content" may refer to carbon measured by C/S (carbon/sulfur) analysis as the total carbon content in a sample, including carbon contained in "fixed carbon", "volatile matter", and "ash".

Pyrolysis of methane and production of solid, iron-containing carbon

According to an embodiment of the present invention, a recarburizer is produced using a carbonaceous product formed during methane pyrolysis, namely a solid, iron-containing carbonaceous material. As such, the solid, iron-containing carbonaceous material is a porous material containing a predetermined amount of iron, and may be molded to have a predetermined shape, thereby producing a recarburizer useful in a steel-making process. In particular, methane pyrolysis may be performed such that the solid, iron-containing carbonaceous material includes porous carbon, having nano-sized pores, for example three types of pores, namely micropores, mesopores, and macropores, all or simultaneously, with high carbon content and low moisture and ash contents compared to a conventional carbon-based recarburizer (e.g., a coke-based recarburizer). To this end, a pyrolysis reactor of a specific type and structure may be selected, or pyrolysis conditions may be adjusted.

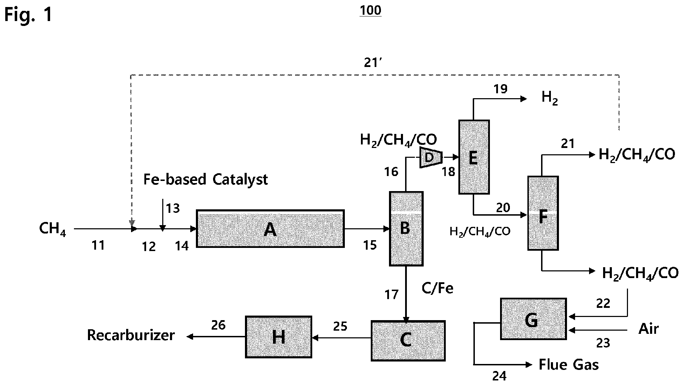

In an embodiment, the process of producing a recarburizer using a solid, iron-containing carbonaceous material that is a byproduct in obtaining hydrogen by pyrolyzing a methane-containing feedstock in the presence of an iron-based catalyst is shown in FIG. 1.

In the illustrated embodiment, the methane-containing feedstock 11 may be gaseous and is introduced into a methane pyrolysis process 100 via a feed line. Here, the methane-containing feedstock 11 introduced into the methane pyrolysis process 100 may be typically at least one selected from among pure methane, liquefied natural gas, natural gas, off-gas of a petrochemical process (i.e., a byproduct gas of a chemical process, which may be formed in the process of producing ethylene, etc. by naphtha cracking), biogas (a mixed gas of methane and carbon dioxide formed from biomass by anaerobic digestion, which may contain hydrogen sulfide, moisture, ammonia, nitrogen, oxygen, etc. as impurities), and a mixed gas containing methane as a main component (e.g., at least 50 vol%, for example at least 80 vol%, for example at least 90 vol%). In this regard, natural gas contains mainly methane, and may further include, in addition to methane, a hydrocarbon gas component (e.g., at least one selected from the group consisting of ethane, propane, and heavier hydrocarbons) and/or a dilution gas (e.g., at least one selected from the group consisting of nitrogen, oxygen, carbon dioxide, helium, and hydrogen sulfide). In this case, the concentration of the dilution gas in the feedstock may be, for example, 15 vol% or less, for example 12 vol% or less, for example 10 vol% or less. Meanwhile, since biogas contains a significant amount of carbon dioxide (e.g., at least 20 vol%, for example 30 to 50 vol%, for example 35 to 45 vol%), it may be subjected to an upgrading process (e.g., at least one selected from among absorption (e.g., an amine-based absorbent), membrane separation, adsorption (e.g., using a porous solid adsorbent), chemical looping, and the like) using a carbon dioxide separation (or capture) means known in the art as a pretreatment step before introduction into a pyrolysis reactor. According to a certain embodiment, the methane-containing feedstock may be pure methane.

In the illustrated embodiment, the methane-containing feedstock 11 may be combined with a recycle gas stream 20, as will be described later, forming a mixed gas stream 12, which is then combined with an iron oxide-containing catalyst in the form of solid particles supplied via line 13 and then introduced into a pyrolysis reactor A via line 14. However, in another embodiment, the methane-containing feedstock 11, the recycle gas stream 20, and the iron oxide-containing catalyst may be combined at the same time, or may be combined in different orders.

In this regard, methane, which is a stable nonpolar molecule as an inert gas, has C-H binding energy of 435 kJ/mol, and thus has high thermodynamic stability and is not easily decomposed. By way of example, to cleave the strong C-H bonds of methane molecules, pyrolysis reaction in the pyrolysis reactor A involves or includes auto-thermal reduction in which the iron oxide-containing catalyst is reduced using methane as a reducing agent. Here, the auto-thermal reduction in the presence of an iron oxide-containing catalyst may be based on a reaction mechanism represented in Scheme 1 below.

$$[\text{Scheme 1}] \quad\quad Fe_2O_3 + 3CH_4 \rightarrow 2Fe + 3CO + 6H_2$$

As represented in the reaction scheme, the iron oxide-containing catalyst is converted to a reduced form (particularly, elemental iron) due to reaction with methane. In this auto-thermal reduction, unlike the steam reforming reaction of methane, carbon dioxide is not generated, carbon monoxide is formed as well as hydrogen, and iron oxide is reduced to elemental iron, which may act as an active catalyst for a pyrolysis reaction to produce solid carbon (C) and hydrogen ($H_2$), as represented in Scheme 2 below.

$$[\text{Scheme 2}] \quad\quad CH_4 \rightarrow C + 2H_2$$

According to an embodiment, the iron oxide-containing catalyst may be at least one selected from among, for example, iron oxide, iron ore, iron-supported catalyst, and the like. In this regard, iron oxide is largely known as eight types depending on the oxidation state thereof, but in view of supply and demand, iron ore including hematite ($\alpha$-$Fe_2O_3$) or maghemite ($\gamma$-$Fe_2O_3$) with the chemical formula of $Fe_2O_3$ is favorably used. Typically, the amount of iron (Fe) (elemental basis) in the iron ore may fall in the range of, for example, 60 to 70 wt%, for example 62 to 68 wt%, for example 64 to 66 wt%. Here, the amount of iron may vary depending on the origin thereof.

Also, the iron oxide containing catalyst may be an iron-supported catalyst. For the iron-supported catalyst, the support may be a porous inorganic oxide material such as alumina ($Al_2O_3$), silica ($SiO_2$), magnesia (MgO), titania ($TiO_2$), zirconia ($ZrO_2$), etc. Illustratively, the porous support may have a specific surface area (BET) of 100 to 200 $m^2/g$ (for example 130 to 180 $m^2/g$, for example 150 to 170 $m^2/g$) and a pore volume of 0.4 to 1 $cm^3/g$ (for example 0.5 to 0.9 $cm^3/g$, for example 0.6 to 0.8 $cm^3/g$). Moreover, the amount of iron (which may be in the form of elemental iron and/or iron oxide) in the iron-supported catalyst may fall in the range of, for example, 5 to 40 wt%, for example 7 to 20 wt%, for example 9 to 15 wt%.

Furthermore, the iron oxide (e.g. $Fe_2O_3$)-containing catalyst in the form of solid particles may have an average particle size of, for example, 20 to 425 $\mu$m, for example 45 to 300 $\mu$m, for example 106 to 180 $\mu$m, when analyzed by a sieve method. Since the particle size (or size) of the iron oxide-containing catalyst may affect catalytic reaction and transfer in a rotary kiln (when the particle size thereof is too small, injection using a supply unit or a feeder may become difficult), it may be advantageously adjusted in the above range. In this regard, when iron ore is used as a catalyst, it may be pulverized to an appropriate size (particle size). Here, pulverization may be performed using means known in the art. Examples of the pulverization means include a roller-type grinder, a vibrating mill, a ball mill, a port mill, a hammer mill, a pulverizer, a gyratory grinder, a gyratory mill, and the like, and a combination of two or more thereof may also be used for pulverization.

Also, when the pyrolysis system is built on lab-scale, the flow rate (standard liter per minute; slm) of the methane-containing feedstock supplied to the reactor may be adjusted in the range of, for example, 0.5 to 5 slm, for example 1 to 3 slm, for example 1.5 to 2 slm. Moreover, the flow rate of the iron oxide-containing catalyst may be adjusted in the range of, for example, 15 to 80 cc/hr, for example 18 to 65 cc/hr, for example 31 to 55 cc/hr. In a commercial process, however, the absolute value of each of the flow rate of the methane-containing feedstock and the flow rate of the iron oxide-containing catalyst may increase and thus may be adjusted in consideration of the ratio between the flow rate of the feedstock and the flow rate of the catalyst. For example, based on the ratio of the flow rate of the catalyst divided by the flow rate of methane, the value may range from 0.05 to 2.6, for example from 0.1 to 1, for example from 0.2 to 0.6. However, the above numerical ranges may be understood exemplarily.

In the illustrated embodiment, the methane-containing feedstock and the iron oxide-containing catalyst in the form of solid particles are introduced into a reactor in a co-current flow manner. If the catalyst and the methane-containing feedstock are introduced in a counter-current manner, this may cause production of water ($H_2O$) and consumption of hydrogen due to reaction between hydrogen generated during pyrolysis and iron oxide ($Fe_2O_3$) in the introduced catalyst.

According to an embodiment, the methane pyrolysis reactor A may be a rotary kiln-type reactor, the use of which may solve problems related to auto-thermal reduction of methane using a fluidized-bed reactor, such as increased operation difficulties due to a change in particle density and the like and difficulty in continuous operation. In particular, the rotary kiln-type reactor is less affected by the particle size of the catalyst and is easy to operate due to a large density difference between the iron oxide-containing catalyst used in the pyrolysis and the carbon produced by reaction (e.g. appearance density of iron ore: 2.24 $g/cm^3$, apparent density of carbon: 0.14 $g/cm^3$).

Also, as the pyrolysis proceeds, the carbon-based material attached to the iron-based solid particles has a high angle of repose (52°), such that volume utilization inside the reactor (e.g., a rotary kiln) increases, and accordingly the residence time of the solid increases, raising reactivity (e.g. the pyrolysis may proceed in a way that at least 10%, for example 30 to 50% of the volume of the reactor is filled with solid, when a rotary kiln reactor is used). The angle of repose of the iron (Fe)-containing carbon-based solid produced by pyrolysis may be, for example, at least 10°, for example at least 30°, for example at least 50°.

Meanwhile, according to an embodiment, when a rotary kiln-type reactor is used for methane pyrolysis, the residence time ($\tau$) of the solid in the reactor is proportional to the length/diameter ratio (L/2r) of the kiln and the angle of repose ($\varphi$), and is inversely proportional to the inclination and rotational speed of the kiln, and may be represented by Equation 1 below.

[Equation 1]

$$\tau = \frac{L sin(\varphi)}{2\pi r \omega \Phi}$$

Here, L is the length of the kiln (or tube in the rotary kiln), ($\varphi$ is the angle of repose, $r$ is the radius of the kiln (or tube in the rotary kiln), $\Phi$ is the inclination of the kiln, and $\omega$ is the rotational speed.

According to the present invention, the reaction temperature (pyrolysis temperature) in the pyrolysis reactor A is adjusted in the range of 600 to 950°C, for example 700 to 900°C, for example 730 to 870°C, for example 750 to 850°C. Moreover, the pyrolysis may be carried out in an atmosphere of gas. The reaction pressure may be adjusted in the range of, for example, 0.1 to 10 bar, for example 0.5 to 5 bar, for example 1 to 2 bar, for example 1.3 to 1.8 bar. Also, the residence time of the solid (for example, iron oxide-containing catalyst) in the reactor may be adjusted in the range of, for example, 1 to 150 hours, for example 10 to 120 hours, for example 15 to 100 hours.

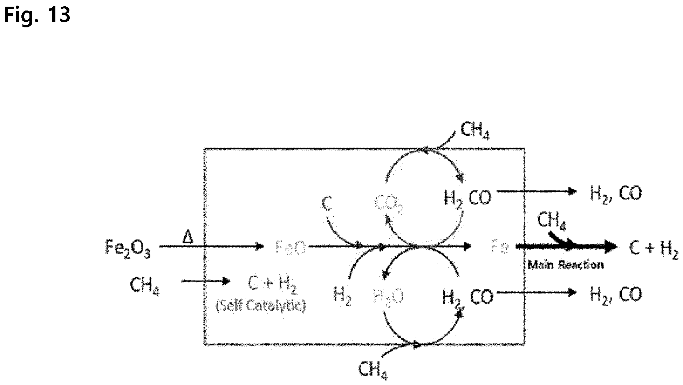

Moreover, neither water ($H_2O$) nor carbon dioxide ($CO_2$) is generated in a mechanism of auto-thermal reduction reaction of methane (Scheme of Fig. 13), but carbon monoxide (or carbon dioxide and water in the initial stage of reaction) may be generated during the actual pyrolysis (in which iron oxide ($Fe_2O_3$) is reduced to a metallic form thereof while forming carbon oxides). This side reaction may be remarkable when using an inexpensive iron oxide-containing catalyst, namely iron ore. As a result, an induction section (a section until the peak conversion is reached) may be formed during the auto-thermal reduction of methane.

The conversion of methane in the pyrolysis reaction may be adjusted in the range of, for example, at least 70%, for example 75 to 95%, for example 80 to 90%. Here, the conversion of methane may be increased to a certain level or more by operation at an elevated reaction temperature, but the amount of hydrogen produced may be decreased due to heat loss caused by high-temperature operation, increased catalyst deactivation, etc. Hence, it may be advantageous to control the conversion of methane in consideration of the desired amounts of hydrogen and carbon produced and the amount of hydrogen produced per active metal in the catalyst.

Also, respective selectivity vales of hydrogen and carbon monoxide in the gas products (e.g. based on a conversion of methane of 90%) may be, for example, at least 1% (for example at least 1.5%, for example at least 2%), and at least 1% (for example at least 1.5%, for example 2 to 5%). However, it is to be understood that the above numerical ranges are described for illustrative purposes.

Referring back to FIG. 1, as iron oxide ($Fe_2O_3$) in the catalyst is reduced by methane in the reactor A, a gas mixture containing unreacted methane as well as hydrogen and carbon monoxide, and solid carbon may be produced. Here, the solid carbon may be graphitic carbon. Graphite has a layered structure, where plate-shaped two-dimensional graphene, in which carbon atoms are linked in a hexagonal shape, is stacked. The graphitic carbon produced in the present embodiment may be composed of, for example, 15 to 30 layers of graphene, for example 18 to 25 layers of graphene. In this regard, as the iron content in the iron-based catalyst introduced into the reactor A increases, carbon having a graphite-type structure can be easily formed. The content of graphitic carbon in the produced carbon may be, for example, at least 90% by weight, for example at least 95% by weight, and for example at least 99% by weight, and may be substantially composed of graphitic carbon. The carbon thus produced may be combined with catalyst particles to form an iron (Fe)-containing carbon-based solid (C/Fe).

Without willing to be bound by a specific theory, the mechanism by which graphitic carbon is formed can be explained as follows: first, methane on the surface of iron (Fe) reduced by an autothermal reduction reaction is converted into amorphous carbon and hydrogen, and then $Fe_3C$ is produced on the surface of iron (Fe) by diffusion of amorphous carbon. Methane may be further converted into amorphous carbon and hydrogen through the catalytic action of $Fe_3C$ thus formed. As such, the internal Fe is crystallized into $Fe_3C$ through continuous diffusion of amorphous carbon and at this time, the supersaturated carbon may be converted to graphite-type carbon.

According to an embodiment, as the carbon produced by pyrolysis is attached to the catalyst particles, a solid may be formed in a weight that is increased by at least 3 times, for example, 4 to 10 times, and 5 to 9 times than the content of iron, which is an active metal in the iron-based catalyst introduced at the beginning of the reaction. In addition, as described above, as reaction progresses inside the reactor, the amount of carbon attached to the catalyst particles also increases and thus an angle of repose may increase compared to the iron-based particles at the beginning of the reaction.

As an example, the apparent density of the iron oxide-containing catalyst in the form of solid particles introduced into the reactor A may be, for example, 0.8 to 2.8 g/cm$^3$, for example 1 to 2.5 g/cm$^3$, for example 1.5 to 2.25 g/cm$^3$, whereas the apparent density of the iron (Fe)-containing carbon-based solid discharged from the reactor A may be, for example, 0.05 to 0.5 g/cm$^3$, for example 0.1 to 0.25 g/cm$^3$, for example 0.12 to 0.2 g/cm$^3$.

The reason why unreacted methane is contained in the gas products in the present embodiment is that a thermodynamic equilibrium of methane, hydrogen, carbon monoxide, and carbon is formed during the pyrolysis with an increase in the internal temperature of the reactor and thus the conversion of methane does not rise any more.

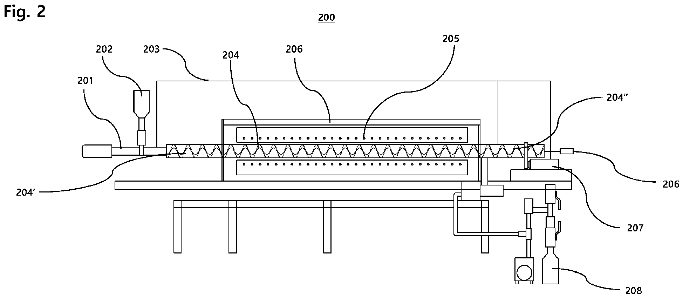

According to an embodiment of the present invention, the configuration of the rotary kiln reactor applicable to the reaction involving methane auto-thermal reduction is schematically shown in FIG. 2.

With reference to the drawing, as described above, the gaseous methane-containing feedstock is introduced into a rotary kiln reactor 200 via line 201, after which an iron oxide-containing catalyst is supplied in a controlled amount by valve operation from a catalyst storage device (e.g. a hopper 202), combined with the methane-containing feedstock, and then introduced together into a tube 204 in the rotary kiln reactor. The tube 204 provides a space for pyrolysis (involving auto-thermal reduction of methane) to occur while accommodating solid particles (i.e. iron oxide-containing catalyst) and gas (i.e. methane-containing feedstock). The material of the tube 204 may, for example, be at least one selected from among, for example, alumina, SiC, FeCrAl alloy, Inconel (NiCr), and heat-resistant stainless steel. Further, any refractory material or bricks may be deposited on the internal surface of the tube 204.

In the illustrated embodiment, the tube 204 is configured such that buffer tubes (specifically an inlet buffer tube 204' and an outlet buffer tube 204") are connected or linked to both sides of a central work tube. Here, the work tube may indicate an area of the tube in which pyrolysis occurs by receiving heat necessary for the reaction in the inner space of the tube 204. As an example, a heater 205 may be provided outside the tube along the length of the work tube. Hereinafter, for consistency of description, "tube" refers to the work tube in which the reaction takes place.

According to an embodiment, the ratio of the length to the inner diameter of the tube 204 (L/D) may be determined in consideration of the residence time of the iron-based catalyst, and may be set in the range of, for example, 5 to 50, for example 10 to 30, for example 15 to 20, which is understood exemplarily.

As the heater 205, any heater known in the art may be used, so long as it is able to supply heat sufficient for pyrolysis into the work tube, specifically formation of free methyl radicals as an activated form of methane and reduction of iron oxide in the catalyst. This heater may be provided outside and/or inside the tube 204. Examples of the heater 205 may include a heat exchanger, a heating coil, and a combustion heater, which may be used alone or in combination. In the illustrated example, the heater 205 may be provided in a way to surround at least a portion of the outside of the tube 204, whereby heat may be transferred to the inner space through the wall of the tube. Also, a housing 206 is configured to surround at least the work tube, making it possible to minimize external influence on the reaction conditions in the tube in which pyrolysis occurs.

In order to rotate the tube 204 in the rotary kiln reactor 200, a rotator 206, for example, a motor may be provided at any position. In FIG. 2, an inlet for the methane-containing feedstock and the solid particle catalyst may be provided at one end of the tube 204, and a motor 206 may be provided at the remaining end (opposite end). Moreover, rotational force may be supplied to the tube 204 via a power transmission member mechanically connected or engaged with the motor, for example, a gear, belt, chain, or the like. Illustratively, it may be advantageous to consider the effect of the supply rate of the solid catalyst particles on the rotational speed of the tube 204 during pyrolysis (the methane conversion may decrease with a decrease in the supply rate of the solid catalyst particles, while transfer of the solid catalyst particles may become difficult with a decrease in the rotational speed of the tube 204).

Considering this tendency, the rotational speed of the tube 204 may be adjusted within a range that is able to increase the average hydrogen production, for example, 0.05 to 5 rpm, for example 0.1 to 3 rpm, for example 0.12 to 2 rpm, for example 0.2 to 1 rpm.

According to an embodiment, due to co-current transfer of the solid iron oxide-containing catalyst particles and the methane-containing feedstock (gas), a pretreatment section and a reaction section may be separately provided in the tube 204. In the pretreatment section, the catalyst particles may be activated using methane. The extent of activation may vary depending on the temperature. For example, when iron oxide-containing catalyst particles are activated at a relatively low temperature (which may be adjusted in the range of 600 to 800°C, for example 700 to 780°C, for example 725 to 750°C), the amount (weight) of carbon produced per weight of iron that is an active metal may increase. As an example, in the pretreatment process, methane and catalyst particles may be introduced in a co-current manner into the tube 204, and the auto-thermal reduction route may be promoted under temperature conditions adjusted as described above, whereby the iron oxide-containing catalyst may be activated to form carbon monoxide and metallic Fe.

The kiln of the rotary kiln reactor 200 can be operated at the horizontal position (i.e., slope of 0°). According to an alternative embodiment, the rotary kiln reactor may be inclined at a predetermined angle in the direction of movement of the solid particles in order to control the residence time of the solid particles. Here, the inclination angle (slope) may be adjusted in the range of 0.01 to 10°, for example 0.02 to 5°, for example 0.05 to 2° on a horizontal basis. The inclination angle may be properly adjusted within the above range in consideration of the fact that the residence time of the solid catalyst particles decreases with an increase in the inclination of the kiln.

In the illustrated embodiment, gas and solid products produced by pyrolysis (involving auto-thermal reduction of methane) in the tube 204 of the rotary kiln reactor are discharged from the tube 204, and as mentioned in conjunction with FIG. 1, the gas mixture and the solid are separated from each other using a gas-solid separator 207. Here, the separated gas mixture may be recycled through line 203 and combined with fresh feedstock. The separated solids, that is, the solid, iron-containing carbon, may be collected by a solid collector 208.

According to an embodiment of the present invention, the efficiency of pyrolysis may be further improved by introducing a screw and lifter combination into a tube of a rotary kiln-type reactor.

In this regard, a kiln equipped with screw baffles is regarded as different from conventional screw-type reactors. By way of example, the screw-type reactors are generally known as auger-type reactors, in which a screw shaft is inserted into a tube. The screw-type reactors are applied to transfer of solid with no change in volume (e.g. polymers, etc.), like extruders, and a screw structure formed on a rotating shaft provided at the center of the tube allows the solid in the tube to move forward by action of a helix flight formed on the shaft according to the rotation of the shaft. However, when carbon generated by pyrolysis of methane occupies much larger volume than the initially introduced catalyst particles as in the illustrated embodiment, uniform contact between the gaseous reactant and the catalyst particles may be prevented and it may be difficult to carry out the reaction at a desired reaction temperature. In particular, as described above, it is preferable to fill the tube of the rotary kiln with a large volume of solid by the increased angle of repose, but when a screw shaft is present, it may be difficult to increase or control the residence time with an increase in the angle of repose. Further, the screw-type reactors are very suitable for reaction during which the volume of solid decreases, for example, reaction in which biomass is gradually pyrolyzed, but are not suitable for methane pyrolysis in which the volume of solid increases due to the generation of carbon during the reaction.

Taking into consideration the foregoing, in an embodiment, unlike the conventional screw-type reactors, a helix baffle is formed to extend along the inner circumferential surface of the tube so that solid particles (or solid) introduced into the tube are transferred. Therefore, the helix baffle formed on the inner circumferential surface of the tube rotates according to rotation of the tube, instead of having a screw shaft, induces forward movement of the solid.

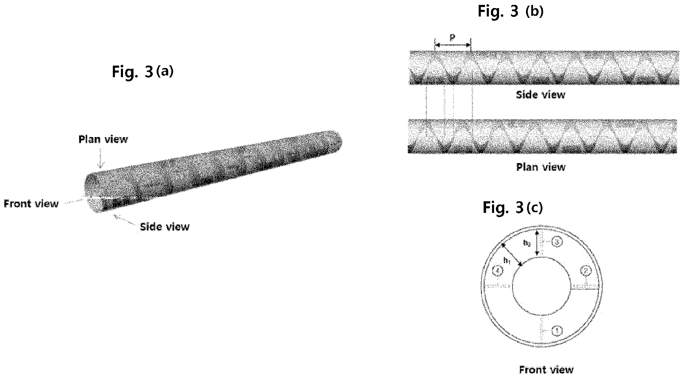

In this regard, FIGS. 3A to 3C depict, respectively, a perspective view, a combination of side and plan views, and a front view showing a combination of a helix baffle and lifters in the tube of the rotary kiln reactor usable in the embodiment.

In the illustrated embodiment, the height $h_1$ of the helix baffle may affect the size of the moving space of the solid in the center of the tube (i.e. the cavity size inside the tube), and may be adjusted in the range of, for example, 1/10 to 1/2, for example 3/20 to 8/20, for example 1/5 to 3/10 of the inner diameter (diameter) of the tube. Also, the pitch P of the helix baffle may be adjusted in the range of, for example, 1/60 to 1/6, for example 1/30 to 2/15, for example 1/20 to 1/10 of the tube length. However, these dimensional ranges may be understood for illustrative purpose only, and thus may be changed in a scale-up process.

Further, the helix baffle essentially has a helix angle, and this helix angle may be determined depending upon the residence time of the solid catalyst. As an example, the helix angle of the helix baffle may be adjusted in the range of, for example, 30 to 60°, for example 35 to 55°, for example 40 to 50°.

With reference to the drawings, at least one lifter is provided on the inner circumferential surface of the tube corresponding to at least one among pitches P of the helix baffle formed in the tube. Typically, lifters may be provided at respective pitches of the helix baffle in the tube, but in some cases, no lifters may be provided in areas corresponding to some pitches, or lifters having other shapes may be provided.

In the illustrated embodiment, one lifter is provided per pitch of the helix baffle, and is formed at an angle of 90° with respect to the lifter provided at an adjacent pitch when viewed from the front (lifters 1 to 4 in FIG. 3). This arrangement may be understood for illustrative purpose only, and in an embodiment, the angle between the lifters may be properly adjusted in the range of, for example, 30 to 360°, for example 50 to 180°, for example 60 to 120°.

In the illustrated embodiment, the height $h_2$ of the lifter may be determined in consideration of the height $h_1$ of the helix baffle, and may be adjusted in the range of, for example, 1/10 to 1/2, for example 3/20 to 8/20, for example 1/5 to 3/10 of the inner diameter (diameter) of the tube. The thickness may fall in the range of, for example, 1/20 to 1/2, for example 1/10 to 2/5, for example 3/20 to 3/10 of the height $h_2$ of the lifter. In addition, according to an embodiment, the ratio of the height $h_2$ of the lifter to the height $h_1$ of the helix baffle may be adjusted in the range of, for example, 0.25 to 2, for example 0.5 to 1.5, for example 0.75 to 1.25.

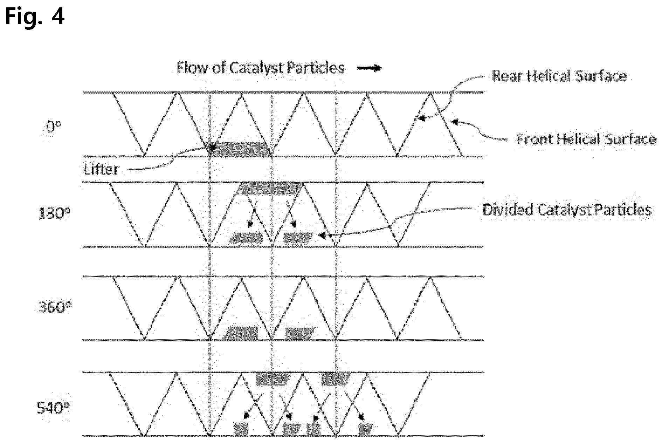

In this regard, as the catalyst particles move within the tube of the rotary kiln reactor, the catalyst particles are divided by the lifters as schematically shown in FIG. 4.

With reference to the drawing, when the catalyst particles move along a helical surface in the rotating tube and contact (or collide) with the lifters, they move while being divided into spaces in front of and behind the pitch where each lifter is provided (i.e. residence time of the catalyst particles may be increased because the catalyst particles are dispersed during movement in the tube). In this way, by combining the lifters and the helix baffle formed on the inner circumferential surface of the tube in the rotary kiln reactor, the residence time of the solid, particularly the solid particle catalyst, in the reactor may be controlled. As such, the combination of the helix baffle and the lifters enables uniform contact between the gaseous methane-containing feedstock and the catalyst over a controlled period of time, thereby maximizing production of target products, such as hydrogen, carbon monoxide, and carbon. Moreover, the amount of the solid catalyst particles that move forward may be adjusted simply by changing the internal structure and dimensions of the tube, such as the number, shape, dimensions, and arrangement of lifters and the height and pitch of the helix baffle.

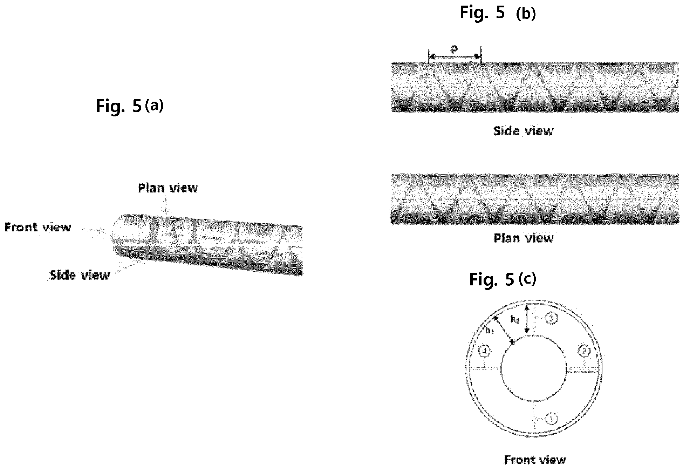

A modification in which a plurality of lifters (particularly, four lifters) per pitch of the helix baffle is provided at a predetermined angle to each other is shown in FIGS. 5A to 5C.

With reference to the drawings, a plurality of lifters is provided per pitch, and in the illustrated embodiment, four lifters are provided per pitch, which may be understood for illustrative purpose only. As an example, lifters of up to 12, for example 2 to 10, for example 3 to 6 may be provided per pitch. As other details have been described with regard to FIG. 3, a redundant description thereof will be omitted.

When the helix baffle and the lifters are combined in this way, disadvantages when separately installing the helix baffle and the lifters may be effectively alleviated (when installing only the helix baffle, it may be advantageous to transfer the solid catalyst particles in the rotary kiln, but efficient contact between the catalyst and the gaseous feedstock may be difficult, and when installing only the lifters, contact between the catalyst and the gaseous feedstock may be improved, but it may be difficult to transfer the catalyst at a constant amount or speed).

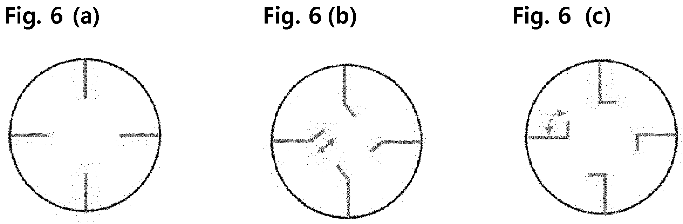

Various examples of the shapes of the lifters provided in the tube of the rotary kiln reactor are shown in FIGS. 6A to 6C.

Specifically, FIG. 6A shows a straight lifter, and FIGS. 6B and 6C show bent lifters. In FIG. 6B, since the lifter has a shape bent in an oblique line, the function of increasing the lifting amount (volume) of the catalyst and the lifting height of the catalyst may be enhanced due to the increased volume of the lifter. Also, in FIG. 6C, the lifter has a shape bent at an angle of 90° (or a rectangular lifter), and as such, it provides a greater increase in the lifting height of the catalyst.

Meanwhile, in accordance with the process shown in FIG. 1, the gas-phase mixture and the solid-phase iron-containing carbon (C/Fe) formed by methane pyrolysis in the reactor A pass through the line 15 and are then separated by a gas-solid separator B known in the art. Examples of such a separator include a cyclone, a hydrocyclone, a gravity settling device, a spray scrubber, a venturi scrubber, a bag filter, a pocket filter, an electrostatic precipitator, and the like. In the illustrated embodiment, based on the gas-solid separation described above, the gas mixture containing hydrogen, carbon monoxide, and methane (e.g., unreacted methane) may be transferred through line 16.

In the illustrated embodiment, the molar ratio of hydrogen ($H_2$)/carbon monoxide (CO) in the gas mixture 16 (e.g. based on a methane conversion of 50 to 90%) may be adjusted in the range of, for example, 20 to 70, 40 to 65, or 50 to 60. The molar ratio of hydrogen/carbon monoxide may be 55 in a specific embodiment. Also, the molar ratio of hydrogen ($H_2$)/methane ($CH_4$) in the gas mixture 16 (e.g. based on a methane conversion of 50 to 90%) may be adjusted in the range of, for example, 1 to 60, 3 to 55, or 10 to 50. Specifically, based on the methane conversion of 90%, the molar ratio thereof may be adjusted in the range of, for example, 15 to 60, 20 to 40, or 23 to 30. Based on the methane conversion of 70%, the molar ratio thereof may be adjusted in the range of, for example, 3 to 10, 4 to 8, or 5 to 6. Based on the methane conversion of 50%, the molar ratio thereof may be adjusted in the range of, for example, 1 to 4, 1.5 to 3, or 2 to 3. In a specific embodiment, the molar ratio of hydrogen ($H_2$)/methane ($CH_4$) in the gas mixture may be 26.

In the illustrated embodiment, the solid-phase iron-containing carbon separated by the gas-solid separator B may be transferred through line 17. Here, the molar ratio of carbon (C)/iron (Fe) (e.g. based on a methane conversion of 50 to 90%) may be adjusted in the range of, for example, 25 to 60, 30 to 50, 35 to 45, and may be 42 in a specific embodiment.

In the illustrated embodiment, the gas mixture 16 separated using the gas-solid separator B may be transferred to a process gas compressor D and pressurized. Here, the reason why pressurization is performed is due to a downstream adsorption process. In an embodiment, the increased pressure may be determined considering a difference in adsorption capacity depending on the pressure of the adsorbent. For example, in a 4-tower pressure swing adsorption (PSA) process, the adsorption pressure to achieve a hydrogen recovery of 85 to 90% may fall in the range of at least 10 bar, or 12 to 25 bar, or 15 to 20 bar.

Referring back to FIG. 1, hydrogen of high purity may be separated from the pressurized gas mixture via line 18 using a gas separation technique known in the art. In this case, examples of the gas separation technique may include pressure swing adsorption (PSA), vacuum swing adsorption (VSA), membrane separation, and the like. In the illustrated embodiment, the pressurized gas mixture may be transferred to a gas separation unit E, specifically a PSA unit, in which the PSA unit may be filled or packed with an adsorbent corresponding to the type of gas to be separated. Here, PSA, as is known in the art, may be a technique for separating gases using adsorption capacity varying depending on a difference in pressure and adsorption characteristics of solid adsorbents to gaseous materials.

In this regard, the PSA unit may be typically filled with an adsorbent corresponding to the molecular size and adsorption strength of the gas component. Here, the pore size of the adsorbent capable of selectively adsorbing each of carbon monoxide and methane may fall in the range of 4 to 5 Å. However, hydrogen with the lowest adsorption strength may be separated in such a manner that it is discharged without being adsorbed. Typically, the gas mixture separation process may use (i) molecular sieves (e.g. 4A zeolite, 5A zeolite) for nitrogen, carbon monoxide, and methane, (ii) activated carbon for methane, C2 and C3 hydrocarbons, and carbon dioxide, (iii) silica gel for C3 or higher hydrocarbons, and (iv) activated alumina for aromatics, $H_2S$, $H_2O$, HCl, etc., (adsorption strength increases in the order from (i) to (iv)). As illustrated herein, packing the molecular sieves may be sufficient for selectively separating hydrogen from the gas mixture (mainly composed of hydrogen, carbon monoxide, and methane), which is produced as pyrolysis products.

The types of adsorbents and principles of adsorption and desorption for separating hydrogen, carbon monoxide, and methane are known in the art, and a description thereof will be omitted. According to an embodiment, however, desorption operation conditions may be set depending on target recovery of hydrogen. In this regard, the recovery may increase with a decrease in desorption pressure, while the purity of the separated gas may decrease with an increase in the recovery. Considering this correlation, the desorption operation pressure to achieve a hydrogen recovery rate of 85 to 90% may be set to 1 to 1.5 bar.

According to an alternative embodiment, unlike the illustrated embodiment, each of hydrogen, carbon monoxide, and methane may be separated and recovered with high purity from the gas mixture. As such, separation may be sufficient only using a molecular sieve and activated carbon in combination. Here, the separated methane may be recycled and combined with a fresh methane-containing feedstock 11.

Referring again to FIG. 1, the high-purity hydrogen separated by the separation process of the gas mixture may be recovered via line 19, and the remaining gas components (e.g., PSA tail gas) are discharged in the form of mixed gas via line 20. Here, the gas stream may contain residual hydrogen, methane, and carbon monoxide that were not separated in the preceding hydrogen separation process. The gas stream may then be split in a predetermined ratio through a gas splitter F, where the split gas stream 21 (containing hydrogen, methane, and carbon monoxide) may be recycled as a gas stream 21' via recycle line and may be combined with a fresh methane-containing feedstock and then introduced into the pyrolysis reactor A as described above. The gas stream 22 (containing hydrogen, methane, and carbon monoxide) split and discharged by the gas splitter F may be transferred to a combustion device G, burned by supply of oxygen-containing gas (e.g. air), and discharged as flue gas 24. For example, the ratio (volume basis) of the recycle gas stream 21 split by the gas splitter F to the gas stream 22 for combustion device supply may be adjusted in the range of, for example, 0.75 to 1.75:1, for example 0.8 to 1.5:1, for example 0.95 to 1.25:1, which may be understood as an example.

Meanwhile, referring to FIG. 1, the solid, iron-containing carbonaceous material (C/Fe) 17 separated by a gas-solid separator B may be transferred to a storage tank C and stored.

In an embodiment, the recovered (or recovered and stored) iron-containing carbonaceous material 17 may include porous carbon having nano-sized pores, for example three types of pores, namely micropores, mesopores, and macropores. For the recarburizer having such a pore structure, based on the same particle size, reaction area efficiency in the molten metal may be improved, so it is suitable for use as a recarburizer, as will be described later.

In this regard, the pore structure of the iron-containing carbonaceous material may be influenced by reaction conditions, such as the pyrolysis temperature of methane. For example, when the pyrolysis temperature is low, the pore volume and specific surface area (BET) of micropores and mesopores and iron content in solids (iron-containing carbonaceous material) may be relatively high, whereas when the pyrolysis temperature is high, the pore volume and specific surface area (BET) of micropores and mesopores and iron content in solids may be relatively low.

In an embodiment, the iron content in the obtained iron-containing carbonaceous material may be in the range of, for example, 5 to 20 wt%, for example 7 to 18 wt%, for example 9 to 15 wt%. Also, in an embodiment, the iron-containing carbonaceous material may further contain at least one of silicon or aluminum, which may be derived from iron ore or an iron-based catalyst using a silica-based and/or alumina-based support.

Here, the content of silicon in the solid, iron-containing carbonaceous material may be, for example, 0.8 wt% or less, for example 0.5 wt% or less, for example 0.4 wt% or less, for example 0.2 wt% or less. Also, the content of aluminum in the solid, iron-containing carbonaceous material may be, for example, 2 wt% or less, for example 1.5 wt% or less, for example 1 wt% or less, for example 0.5 wt% or less.

In an embodiment, the solid, iron-containing carbonaceous material 17 may be subjected to proximate analysis (e.g., by ASTM D7582) and carbon/sulfur (C/S) analysis, determining total carbon content and respective contents of fixed carbon, moisture, volatile matter, and ash. In this regard, the total carbon content in the iron-containing carbonaceous material may be in the range of, for example, at least 80 wt%, for example at least 85 wt%, for example 86 to 95 wt%, for example 88 to 93 wt%. The content of fixed carbon in the iron-containing carbonaceous material may be in the range of, for example, at least 60 wt%, for example at least 65 wt%, for example 67 to 85 wt%, for example 69 to 80 wt%. Also, the content of moisture in the iron-containing carbonaceous material may be in the range of, for example, at most 1 wt%, for example at most 0.5 wt%, for example at most 0.3 wt%, for example at most 0.2 wt%, and in certain embodiments, moisture may not be substantially contained. In addition, the content of volatile matter in the iron-containing carbonaceous material may be in the range of, for example, at most 20 wt%, for example at most 18 wt%, for example at most 17 wt%, for example at most 16 wt%. Furthermore, the content of ash in the iron-containing carbonaceous material may be in the range of, for example, at most 20 wt%, for example at most 18 wt%, for example at most 17 wt%, for example at most 16 wt%.

Meanwhile, since the iron-containing carbonaceous material is formed based on catalytic pyrolysis of methane-containing gas, the content of impurities such as sulfur may be very low to the level of, for example, 0.05 wt% or less (for example 0.005 wt% or less, for example 0.0005 wt% or less), and in certain embodiments, impurities such as sulfur may not be substantially contained. These compositional characteristics are in contrast to the fact that carbon-based materials conventionally used as recarburizers contain a significant amount of ash and have low fixed carbon content, for example coke-based recarburizers contain impurities such as sulfur, etc.

In an embodiment, the iron-containing carbonaceous material 17 may be in the form of a powder, and the particle size of such a powder may be in the range of, for example, 10 to 100 $\mu$m, for example 20 to 80 $\mu$m, for example 30 to 60 $\mu$m.

In addition, the specific surface area (BET) of the iron-containing carbon is determined within the range of 10 to 50 $m^2$/g, for example, 20 to 40 $m^2$/g, or 25 to 35 $m^2$/g.

According to the present invention, the pore volume of micropores and mesopores in the iron-containing carbon is in a range of 0.05 to 0.2 $cm^3$/g, for example 0.07 to 0.15 $cm^3$/g, or 0.08 to 0.12 $cm^3$/g. In addition, the size of micropores and mesopores in the iron-containing carbon measured by nitrogen adsorption (physical adsorption) may be, for example, within the range of 1.5 to 50 nm, 1.6 to 10 nm, or 1.8 nm to 5 nm.

In an embodiment, micropores and mesopores of the iron-containing carbon may be classified into primary pores and secondary pores depending on the pore size (diameter) range, when measured by nitrogen adsorption. Here, the size of the primary pores may be, for example, within the range of 1.5 to 4 nm, 2 to 3 nm, or 2.3 to 2.7 nm, and the size of the secondary pores may be, for example, within the range of 4 to 50 nm, 4.2 to 10 nm, or 4.5 to 6 nm.

In addition, the size of the macropores in the iron-containing carbon, which may be measured by nitrogen adsorption, may be within the range of, for example, more than 50 and up to 200 nm, 75 to 150 nm, or 90 to 140 nm. Moreover, the pore volume of the macropore may be, for example, at least 0.1 $cm^3$/g, 0.2 to 1 $cm^3$/g, 0.25 to 0.8 $cm^3$/g, or 0.3 to 0.6 $cm^3$/g.

Production of recarburizer

In the illustrated embodiment, the iron-containing carbonaceous material 17 may be stored in the storage tank and then transferred via line 25, producing a recarburizer in the form of a molded product 26 using a molding device H. Alternatively, the iron-containing carbonaceous material may be transferred directly to the molding device H from the gas-solid separator B without passing through the storage tank C.

In an embodiment, the iron-containing carbonaceous material is produced into a molded product having a predetermined shape, for example a molded product for a recarburizer. Techniques for producing such a molded product are known in the art, and examples thereof may include briquetting, extrusion, press molding, tableting, pelletization, granulation, etc.

In an embodiment, when the iron-containing carbonaceous material (e.g., in powder form) is dry or does not contain sufficient moisture for molding, water may be added to the iron-containing carbonaceous material and mixed to afford a molding mixture (or paste). In an embodiment, the amount of moisture may be in the range of, for example, 35 wt% or less, for example 5 to 30 wt%, for example 10 to 25 wt%, for example 15 to 20 wt%, based on the amount of the iron-containing carbonaceous material. Thereafter, the molding mixture may be molded in a mold or die in the molding device H to obtain a molded product with a desired shape and dimensions. In this way, a molded product having a desired shape may be produced only by containing an appropriate amount of moisture in the iron-containing carbonaceous material.

In an embodiment, the shape and dimensions of the molded product are such that the molded product has a shape and dimensions suitable for use as a recarburizer. For example, the molded product may have at least one shape selected from among a cylindrical shape, a granular shape, a bead shape, a spherical shape, a cubic shape, etc. For example, the size of the molded product may be quantified by the average diameter or the equivalent diameter for any other 3D geometric shape, where the equivalent diameter of a non-spherical molded product may be considered as the diameter of a sphere having the same volume as the actual molded product. As an example, the average diameter of the molded product for a recarburizer may be adjusted in the range of, for example, 1 to 25 mm, for example 2 to 20 mm, for example 2.5 to 15 mm, for example 3 to 12 mm. In certain embodiments, the average diameter of the molded product may be in the range of, for example, 3.5 to 11 mm, for example 4 to 10 mm, for example 4.5 to 9.5 mm, for example 5 to 9 mm.

Also, in an embodiment, it may be advantageous for the molded product to have a uniform size distribution, for example, a standard deviation of 100% or less of the average diameter, for example 50% or less, for example 25% or less, for example 10% or less. In some embodiments, it may be 5% or less of the average diameter, for example 3% or less.

In an embodiment, after production of the molded product, additional molding may be optionally performed to obtain a molded product having a different shape. For example, the molded cylindrical pellets may be manufactured into pellets having a different shape, for example a spherical shape or a bead shape, using a pelletizer.

In addition, the molded product formed by the molding device H may be dried to remove residual moisture, etc. in a subsequent step, and natural drying or drying under elevated temperature conditions (e.g., 50 to 150°C, for example 60 to 135°C, for example 70 to 120°C) may be further performed. Thereafter, the molded product may be stored using a sorter, or may be packed and shipped.

In an embodiment, when used as a recarburizer, it may be advantageous to produce a molded product having a predetermined strength in consideration of handleability, ease of introduction into the molten metal, etc. For example, room-temperature compressive strength (GCS (grain crush strength) analysis) of the molded product may be in the range of, for example, at least 1 kgf/cm$^2$, for example 3 to 50 kgf/cm$^2$, for example 5 to 20 kgf/cm$^2$.

In an embodiment, the molding process may be performed one or more times until desired mechanical properties are obtained. Here, the moisture in the molded product is reduced by the compression heat generated during the compression process, while the strength is increased.

In an embodiment, the recarburizer in the form of a molded product may be added to iron-containing molten metal or molten steel in a furnace during a steel-making process (e.g., at least one selected from among an electric arc furnace, a blast furnace (BF), a basic oxygen furnace (BOF), and the like). As an example, the amount of the recarburizer that is added may be determined in consideration of the volume in the molten metal, and may be adjusted in the range of, for example, 1 to 10 wt%, for example 2 to 8 wt%, for example 3 to 6 wt%, based on the amount of the molten metal. In this regard, the temperature of the molten metal when introducing the recarburizer may be set in consideration of the quality of the product to be manufactured, and may be in the range of, for example, 1400 to 1700°C, for example 1450 to 1650°C, for example 1500 to 1600°C.

A better understanding of the present invention may be obtained through the following working examples and comparative examples.

## Examples

The properties of materials in Example and Comparative Example were analyzed as follows.

- Particle size analysis in a product was performed using a particle size analyzer of LA-950V2 from Horiba.
- Specific surface area was measured by nitrogen physical adsorption ($N_2$ adsorption) using a physical adsorption analyzer of 3D Flex from Micromeritics.
- The size and pore volume of micropores, mesopores, and macropores were measured by nitrogen physical desorption ($N_2$ desorption) using a physical adsorption analyzer of 3D Flex from Micromeritics.
- The grain crush strength of a molded product was measured using a catalyst grain crushing strength tester from Vinci Technologies.
- XRD pattern was measured using an X-ray diffraction analyzer of X'pert PRO from PANalytical.
- The total carbon content and sulfur content in a product were measured using a CS analyzer of CS844 from LECO.
- Proximate analysis was performed using TGA of Discovery TGA from Waters Pacific Pte Ltd. according to ASTM D7582.
- The element content in a product was measured using inductively coupled plasma (ICP) spectroscopy of ICP-OES Optima8300 from PerkinElmer.
- HRTEM analysis of a product was performed using Tecnai F30 from FEI.

## A. Methane pyrolysis

In examples, iron ore particles having apparent density of 2.24 g/cm$^3$ and average particle size of 106 to 180 $\mu$m were used as a catalyst, and high-purity methane (99.97%) was used as a methane-containing gas.

Methane pyrolysis was performed using a rotary kiln reactor.

Methane pyrolysis was performed in the self-manufactured rotary kiln reactor as illustrated in FIG. 2. The material of the tube in the rotary kiln reactor was Inconel 601 and a heater made of FeCrAl alloy (Kanthal A1) was installed on the outer surface of the tube to supply heat necessary for pyrolysis. Each of the helix baffle and lifter provided to the tube in the rotary kiln reactor was made of Inconel 601. In addition, a catalyst storage device, a feeder connected to the catalyst storage device, a discharge buffer tube, and a carbon storage device connected to the discharge buffer tube were provided, and the catalyst storage device and the carbon storage device were designed not to be affected by the internal pressure of the reactor to enable continuous operation.

### a. Methane pyrolysis 1

The conditions for methane pyrolysis performed in the reactor in a rotary kiln were set as shown in Table 1 below.

[Table 1]

| Items | Pyrolysis conditions |
|---|---|
| Reaction temperature | 820°C |
| Reaction pressure | 1.4 bar |
| Flow rate of methane in gaseous feedstock | 1.5 slm |
| Supply rate of catalyst | 46.9 cc/hr |
| Rotational speed of kiln (tube) | 0.2 rpm |
| Inclination angle of kiln | 1° |

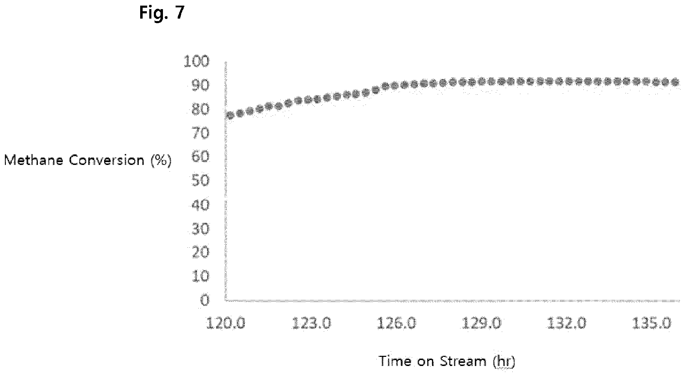

The methane conversion depending on the pyrolysis time (TOS, time on stream) was measured, and the results thereof are shown in FIG. 7.

As shown in FIG. 7, the maximum methane conversion was determined to be 92% at the reaction temperature and reaction pressure set under conditions in which the catalyst and methane were continuously fed. As such, no moisture was generated.

The solid produced during methane pyrolysis was separated and recovered, and is referred to as "sample 1."

**b. Methane pyrolysis 2**

The conditions for methane pyrolysis performed in the reactor in a rotary kiln were set as shown in Table 2 below.

[Table 2]

| Items | Pyrolysis conditions |
|---|---|
| Reaction temperature | 820°C |
| Reaction pressure | 1.4 bar |
| Flow rate of methane in gaseous feedstock | 3 slm |
| Supply rate of catalyst | 59.5 cc/hr |
| Rotational speed of kiln (tube) | 0.13 rpm |
| Inclination angle of kiln | 0.5° |

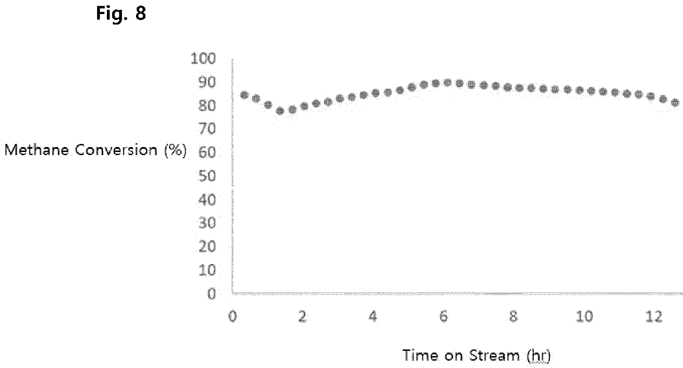

The methane conversion depending on the pyrolysis time (TOS, time on stream) was measured, and the results thereof are shown in FIG. 8. When compared with methane pyrolysis 1, both the flow rate of methane and the supply speed of the catalyst were increased and the rotational speed of the rotary kiln was decreased to thus increase productivity, achieving a methane conversion of up to 89%.

The solid produced during methane pyrolysis was separated and recovered, and is referred to as "sample 2."

**B. Analysis of solids produced during methane pyrolysis**

**a. C/S analysis and ICP analysis**

C/S analysis and ICP analysis were performed on samples 1 and 2 and a commercial recarburizer sample, and the results thereof are shown in Table 3 below.

[Table 3]

| Sample | C (wt%) | S (ppm) | Fe (wt%) | Si (wt%) | Al (wt%) |
|---|---|---|---|---|---|
| 1 | 90.1 | N.A. | 6.16 | 0.15 | 0.08 |
| 2 | 90.4 | N.A. | 8.3 | 0.33 | 1.24 |
| Commercial recarburizer | >99.9 | <500 | N.A. | N.A. | N.A. |

As shown in Table 3, each of samples 1 and 2 has a total carbon content of approximately 90 wt% and contains 10 wt% or less Fe and trace amounts of Si and Al. In contrast, the commercial recarburizer has a total carbon content of 99.9% or more and contains a trace amount of S. Taking into consideration the compositions described above, samples 1 and 2 were judged to be applicable as a recarburizer.

## b. High-resolution transmission electron microscopy (HRTEM) analysis

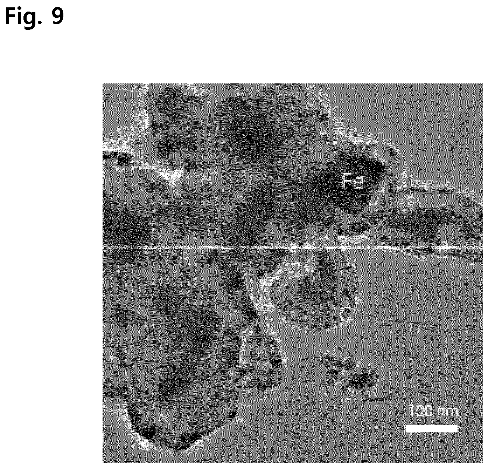

High-resolution transmission electron microscopy (HRTEM) analysis was performed on sample 1, and the results thereof are shown in FIG. 9.

Referring to FIG. 9, it was observed for the iron-containing carbonaceous material produced by catalytic pyrolysis of methane that Fe used as the catalyst was contained in carbon and the outside of Fe was surrounded by carbon.

## c. XRD analysis

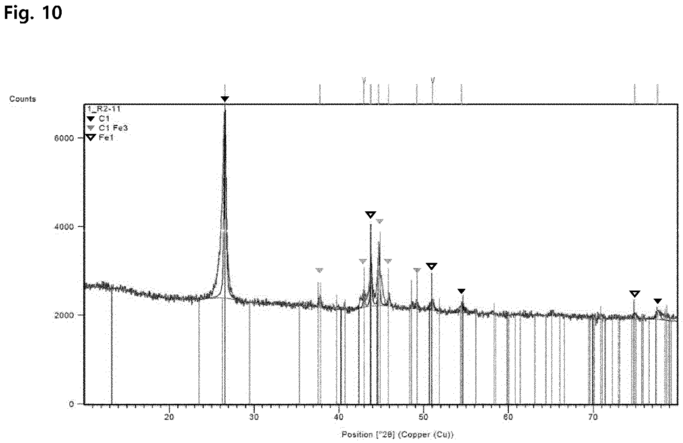

XRD analysis was performed on sample 1, and the results thereof are shown in FIG. 10.

Referring to FIG. 10, it was observed that the carbon in the iron-containing carbonaceous material was present in a form with high crystallinity and iron contained in carbon was present in the form of Fe or $Fe_3C$.

## C. Production of recarburizer

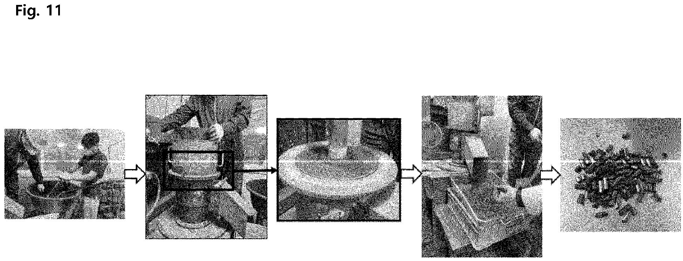

A pellet (cylinder)-shaped recarburizer (diameter: 6 mm, length: 5 to 30 mm) was produced using the iron-containing carbonaceous material in a powder form above according to the procedure shown in FIG. 11.

Specifically, the iron-containing carbonaceous material powder (sample 1) and water were added at a weight ratio of 80 : 20 into a rubber container (diameter: 1 m, depth: 0.3 m) and mixed to obtain a raw material mixture for molding. Next, the raw material mixture for molding was added to a pelletizer (Kumkang ENG, SP-300) equipped with a pelletizing die and molded under conditions of 100 to 200 RPM (primary molding).

Room-temperature compressive strength was measured for the pellets in which the primary molding was completed, and the same molding process was repeated two or three times until at least 10 kgf/cm$^2$ was achieved. Then, the pellets were recovered and dried at 80°C for 24 hours to remove residual moisture.

## a. Proximate analysis

Proximate analysis was performed on the obtained recarburizer pellets (Example), and the results thereof are shown in Table 4 below along with the analysis values for a commercial recarburizer (GPC electrode design recarburizer) known to have good performance in the art.

[Table 4]

| Items | Recarburizer pellets (Example) | Commercial recarburizer |
|---|---|---|
| Total carbon content | 90.1 wt% | >99.9 wt% |
| Fixed carbon | 69.1 wt% | 55.2 wt% |
| Sulfur | N.A. | <500 ppm |
| Ash | 15.7 wt% ($Fe_2O_3$-containing weight) | 43.3 wt% |
| Volatile matter | 15.2 wt% | 1.5 wt% |
| Moisture | 0.0 wt% | 0.0 wt% |
| Iron (Fe) | 6.61 wt% | - |

As shown in Table 4, when compared with the commercial recarburizer product, the recarburizer pellets according to Example had low total carbon content and high volatile matter content. However, the recarburizer according to Example had high fixed carbon content and low ash content, which is advantageous for functioning as a recarburizer. In addition, since the iron (Fe) component contained in the recarburizer pellets corresponds to a raw material added in the steel-making process, it is not expected to cause any special problems in use thereof as a recarburizer.

## b. Pore analysis

Pore analysis was performed on the obtained recarburizer pellets (Example) and the commercial recarburizer sample, and the results thereof are shown in Table 5 below.

[Table 5]

| Sample | Pore volume of micropores and mesopores ($cm^3/g$) | Specific surface area ($N_2$) ($m^2/g$) |
|---|---|---|
| Recarburizer pellets (Example) | 0.108 | 31.0 |
| Commercial recarburizer | 0.013 | 13.0 |

As shown in Table 5, when compared with the commercial recarburizer, the recarburizer pellets according to Example had high specific surface area and high pore volume of micropores and mesopores. Also, since the recarburizer pellets according to Example had greater specific surface area and pore volume than the commercial recarburizer, reaction area efficiency in the molten metal is deemed to be equal or better than that of the commercial product.

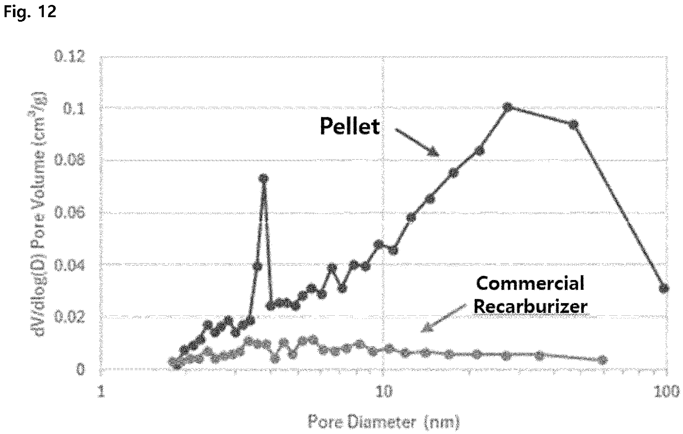

Meanwhile, the results of pore analysis (BET analysis) between the recarburizer pellets (Example) manufactured using the iron-containing carbonaceous material (sample 1) and the commercial recarburizer are shown in FIG. 12.

Referring to FIG. 12, it is worth noting that the recarburizer pellets according to Example have pores with a size of 10 nm or more, unlike the commercial recarburizer, and in particular show a peak at 27.5 nm.

As is apparent from the foregoing, according to an embodiment of the present invention, a solid, iron-containing carbonaceous material formed during methane pyrolysis using an iron-based catalyst can be produced into a molded product having a predetermined shape without a costly purification process, and can thus be employed in high value-added applications such as recarburizers. Moreover, a carbonaceous material, which is a byproduct of methane pyrolysis performed in the presence of an iron-based catalyst in a specific type of pyrolysis reactor, has unique pore properties, and is very suitable for use as a recarburizer for a steel-making process because the content of impurities other than iron is low, the content of carbon is high, and the contents of moisture and ash are low, compared to conventional carbon-based recarburizers.

**Claims**

1.   A method of producing a recarburizer, comprising:

a) providing a solid, iron-containing carbonaceous material (17) derived from methane pyrolysis performed at a reaction temperature of 600 to 950°C in presence of an iron-based catalyst; and
b) producing a molded product having a predetermined shape using the solid, iron-containing carbonaceous material (17),
wherein the solid, iron-containing carbonaceous material (17) comprises all of micropores, mesopores, and macropores;
wherein a content of iron in the solid, iron-containing carbonaceous material (17), on an elemental basis, is in a range of 5 to 20 wt%;
wherein a volume of the micropores and mesopores is in a range of 0.05 to 0.2 $cm^3/g$;
wherein a specific surface area (BET) of the solid, iron-containing carbonaceous material (17) is in a range of 10 to 50 $m^2/g$, wherein the content of iron, volume of the micropores and mesopores, and specific surface area are determined as described in the specification.

2.   The method of claim 1, wherein the solid, iron-containing carbonaceous material (17) is in a powder form, and an average particle size thereof is in a range of 10 to 100 $\mu$m, when determined as described in the specification.

3.   The method of any of claims 1 to 2, wherein step a) comprises:

forming (i) a gaseous mixture (16) containing hydrogen and (ii) a solid, iron-containing carbonaceous material (17) with carbon produced by pyrolysis combined with iron derived from the iron-based catalyst by subjecting a methane-containing feedstock (11) to pyrolysis in the presence of an iron-containing catalyst in form of solid particles; and
separating the solid, iron-containing carbonaceous material (17) from the gaseous mixture (16).

4.   The method of any of the preceding claims, wherein step a) comprises:

a1) forming a pyrolysis product comprising unreacted methane, carbon, hydrogen, and carbon monoxide by introducing a methane-containing feedstock (11) into a rotary kiln-type reactor (A) along with an iron oxide-containing catalyst in form of solid particles; and

a2) separating a gaseous mixture (16) containing unreacted methane, hydrogen, and carbon monoxide, and a solid, iron-containing carbonaceous material (17), respectively, from the pyrolysis product by gas-solid separation.

5. The method of claim 4, wherein the methane-containing feedstock (11) and the iron oxide-containing catalyst in the form of solid particles are introduced into the rotary kiln-type reactor (A) in a co-current flow manner.

6. The method of claim 4 or 5, wherein the rotary kiln-type reactor (A) comprises:

a tube configured to accommodate solid particles and gas and to be rotatable;
a heater configured to supply controlled heat to an inner space of the tube;
a helix baffle configured to extend along an inner circumferential surface of the tube to induce the introduced iron oxide-containing catalyst in the form of solid particles to move forward in a longitudinal direction of the tube according to rotation of the tube; and
at least one lifter provided on the inner circumferential surface of the tube corresponding to at least one of pitches of the helix baffle to disperse the introduced iron oxide-containing catalyst in the form of solid particles in the tube.

7. The method of claim 6, wherein the at least one lifter has a straight shape and/or a bent shape.

8. The method of any of the claims 4 to 7, wherein a rotational speed of the tube in the rotary kiln-type reactor (A) is adjusted in a range of 0.05 to 5 rpm, and a residence time of the iron oxide-containing catalyst in the form of solid particles is adjusted in a range of 1 to 150 hours.

9. The method of any of the preceding claims, wherein:

step b) is performed by a molding technique selected from the group consisting of briquetting, extrusion, press molding, tableting, pelletization, and granulation, and
the molded product (26) has at least one shape selected from the group consisting of a cylindrical shape, a granular shape, a bead shape, a spherical shape, and a cubic shape.

10. The method of any of the preceding claims, wherein the solid, iron-containing carbonaceous material (17) further contains at least one of silicon or aluminum,
wherein the solid, iron-containing carbonaceous material (17) has a content of silicon of 0.8 wt% or less, and a content of aluminum of 2 wt% or less, all as determined as described in the specification.

11. The method of any of the preceding claims, wherein the solid, iron-containing carbonaceous material (17) has a total carbon content of at least 80 wt% and contains at least 60 wt% fixed carbon, at most 1 wt% moisture, at most 20 wt% volatile matter, and at most 20 wt% ash, all as determined as described in the specification.

12. A recarburizer in form of a molded product (26) comprising a solid iron-containing carbonaceous material (17),

wherein the solid iron-containing carbonaceous material (17) comprises all of micropores, mesopores, and macropores;
wherein a volume of the micropores and mesopores is in a range of 0.05 to 0.2 $cm^3/g$;
wherein a specific surface area (BET) of the solid iron-containing carbonaceous material (17) is in a range of 10 to 50 $m^2/g$; and
wherein a content of iron in the solid iron-containing carbonaceous material (17), on an elemental basis, is in a range of 5 to 20 wt%, wherein, the volume of the micropores and mesopores, specific surface area, and content of iron determined as described in the specification.

13. A steel-making process, comprising:

providing an iron-containing molten metal adjusted to a temperature of 1400 to 1700°C; and
adding the recarburizer of claim 12 to the iron-containing molten metal,
wherein the recarburizer is added in an amount of 1 to 10 wt% based on an amount of the iron-containing molten metal.

**Patentansprüche**

1. Verfahren zur Herstellung eines Aufkohlungsmittels, umfassend:

   a) Bereitstellen eines festen, eisenhaltigen kohlenstoffhaltigen Materials (17), das aus einer Methanpyrolyse stammt, die bei einer Reaktionstemperatur von 600 bis 950 °C in Gegenwart eines eisenbasierten Katalysators durchgeführt wird; und
   b) Herstellen eines Formprodukts mit einer vorbestimmten Form unter Verwendung des festen, eisenhaltigen kohlenstoffhaltigen Materials (17),
   wobei das feste, eisenhaltige kohlenstoffhaltige Material (17) sämtliche von Mikroporen, Mesoporen und Makroporen umfasst;
   wobei ein Eisengehalt in dem festen, eisenhaltigen kohlenstoffhaltigen Material (17), auf Elementbasis, in einem Bereich von 5 bis 20 Gew.-% liegt;
   wobei ein Volumen der Mikroporen und Mesoporen in einem Bereich von 0,05 bis 0,2 cm$^3$/g liegt;
   wobei eine spezifische Oberfläche (BET) des festen, eisenhaltigen kohlenstoffhaltigen Materials (17) in einem Bereich von 10 bis 50 m$^2$/g liegt, wobei der Eisengehalt, das Volumen der Mikroporen und Mesoporen und die spezifische Oberfläche wie in der Beschreibung beschrieben bestimmt werden.

2. Verfahren nach Anspruch 1, wobei das feste, eisenhaltige kohlenstoffhaltige Material (17) in Pulverform vorliegt und eine durchschnittliche Partikelgröße davon in einem Bereich von 10 bis 100 μm liegt, wenn sie wie in der Beschreibung beschrieben bestimmt wird.

3. Verfahren nach einem der Ansprüche 1 bis 2, wobei Schritt a) umfasst:

   Bilden (i) eines gasförmigen Gemischs (16), das Wasserstoff enthält, und (ii) eines festen, eisenhaltigen kohlenstoffhaltigen Materials (17) mit durch Pyrolyse erzeugtem Kohlenstoff, der mit aus dem eisenbasierten Katalysator stammendem Eisen kombiniert ist, indem ein methanhaltiger Ausgangsstoff (11) einer Pyrolyse in Gegenwart eines eisenhaltigen Katalysators in Form fester Partikel unterzogen wird; und
   Trennen des festen, eisenhaltigen kohlenstoffhaltigen Materials (17) von dem gasförmigen Gemisch (16).

4. Verfahren nach einem der vorstehenden Ansprüche, wobei Schritt a) umfasst:

   a1) Bilden eines Pyrolyseprodukts, umfassend nicht umgesetztes Methan, Kohlenstoff, Wasserstoff und Kohlenmonoxid, durch Einführen eines methanhaltigen Ausgangsstoffs (11) in einen Reaktor vom Drehrohrofen-Typ (A) zusammen mit einem eisenoxidhaltigen Katalysator in Form fester Partikel; und
   a2) jeweiliges Trennen eines gasförmigen Gemischs (16), das nicht umgesetztes Methan, Wasserstoff und Kohlenmonoxid enthält, und eines festen, eisenhaltigen kohlenstoffhaltigen Materials (17) von dem Pyrolyseprodukt durch Gas-Feststoff-Trennung.

5. Verfahren nach Anspruch 4, wobei der methanhaltige Ausgangsstoff (11) und der eisenoxidhaltige Katalysator in Form fester Partikel in den Reaktor vom Drehrohrofen-Typ (A) in einer Gleichstrom-Strömungsweise eingeführt werden.

6. Verfahren nach Anspruch 4 oder 5, wobei der Reaktor vom Drehrohrofen-Typ (A) umfasst:

   ein Rohr, das dazu ausgelegt ist, feste Partikel und Gas aufzunehmen und drehbar zu sein;
   eine Heizeinrichtung, die dazu ausgelegt ist, einem Innenraum des Rohrs kontrollierte Wärme zuzuführen;
   ein Wendel-Leitblech, das dazu ausgelegt ist, sich entlang einer inneren Umfangsfläche des Rohrs zu erstrecken, um den eingeführten eisenoxidhaltigen Katalysator in Form fester Partikel dazu zu veranlassen, sich entsprechend der Drehung des Rohrs in einer Längsrichtung des Rohrs vorwärts zu bewegen; und
   zumindest eine Hubschaufel, die an der inneren Umfangsfläche des Rohrs entsprechend zumindest einer der Steigungen des Wendel-Leitblechs vorgesehen ist, um den eingeführten eisenoxidhaltigen Katalysator in Form fester Partikel in dem Rohr zu dispergieren.

7. Verfahren nach Anspruch 6, wobei die zumindest eine Hubschaufel eine gerade Form und/oder eine gebogene Form aufweist.

8. Verfahren nach einem der Ansprüche 4 bis 7, wobei eine Drehgeschwindigkeit des Rohrs in dem Reaktor vom Drehrohrofen-Typ (A) in einem Bereich von 0,05 bis 5 rpm eingestellt wird und eine Verweilzeit des eisenoxidhaltigen Katalysators in Form fester Partikel in einem Bereich von 1 bis 150 Stunden eingestellt wird.

9. Verfahren nach einem der vorstehenden Ansprüche, wobei:

Schritt b) durch eine Formgebungstechnik durchgeführt wird, die ausgewählt ist aus der Gruppe bestehend aus Brikettieren, Extrusion, Pressformen, Tablettieren, Pelletieren und Granulieren, und das Formprodukt (26) zumindest eine Form aufweist, die ausgewählt ist aus der Gruppe bestehend aus einer zylindrischen Form, einer körnigen Form, einer Perlenform, einer kugelförmigen Form und einer kubischen Form.

10. Verfahren nach einem der vorstehenden Ansprüche, wobei das feste, eisenhaltige kohlenstoffhaltige Material (17) ferner zumindest eines von Silicium oder Aluminium enthält,

wobei das feste, eisenhaltige kohlenstoffhaltige Material (17) einen Siliciumgehalt von 0,8 Gew.-% oder weniger und einen Aluminiumgehalt von 2 Gew.-% oder weniger aufweist, sämtlich wie in der Beschreibung beschrieben bestimmt.

11. Verfahren nach einem der vorstehenden Ansprüche, wobei das feste, eisenhaltige kohlenstoffhaltige Material (17) einen Gesamtkohlenstoffgehalt von zumindest 80 Gew.-% aufweist und zumindest 60 Gew.-% fixen Kohlenstoff, höchstens 1 Gew.-% Feuchtigkeit, höchstens 20 Gew.-% flüchtige Bestandteile und höchstens 20 Gew.-% Asche enthält, sämtlich wie in der Beschreibung beschrieben bestimmt.

12. Aufkohlungsmittel in Form eines Formprodukts (26), umfassend ein festes eisenhaltiges kohlenstoffhaltiges Material (17),

wobei das feste eisenhaltige kohlenstoffhaltige Material (17) sämtliche von Mikroporen, Mesoporen und Makroporen umfasst;
wobei ein Volumen der Mikroporen und Mesoporen in einem Bereich von 0,05 bis 0,2 $cm^3/g$ liegt;
wobei eine spezifische Oberfläche (BET) des festen eisenhaltigen kohlenstoffhaltigen Materials (17) in einem Bereich von 10 bis 50 $m^2/g$ liegt; und
wobei ein Eisengehalt in dem festen eisenhaltigen kohlenstoffhaltigen Material (17), auf Elementbasis, in einem Bereich von 5 bis 20 Gew.-% liegt, wobei das Volumen der Mikroporen und Mesoporen, die spezifische Oberfläche und der Eisengehalt wie in der Beschreibung beschrieben bestimmt werden.

13. Stahlerzeugungsverfahren, umfassend:

Bereitstellen einer eisenhaltigen Metallschmelze, die auf eine Temperatur von 1400 bis 1700 °C eingestellt ist; und
Zugeben des Aufkohlungsmittels nach Anspruch 12 zu der eisenhaltigen Metallschmelze,
wobei das Aufkohlungsmittel in einer Menge von 1 bis 10 Gew.-%, bezogen auf eine Menge der eisenhaltigen Metallschmelze, zugegeben wird.

**Revendications**

1. Procédé de production d'un agent de recarburation, comprenant :

a) la fourniture d'un matériau carboné solide contenant du fer (17) dérivé d'une pyrolyse du méthane réalisée à une température de réaction de 600 à 950 °C en présence d'un catalyseur à base de fer ; et
b) la production d'un produit moulé ayant une forme prédéterminée au moyen du matériau carboné solide contenant du fer (17),
dans lequel le matériau carboné solide contenant du fer (17) comprend tous les éléments suivants : des micropores, des mésopores et des macropores ;
dans lequel une teneur en fer dans le matériau carboné solide contenant du fer (17), sur une base élémentaire, est comprise dans une plage de 5 à 20 % en poids ;

dans lequel un volume des micropores et des mésopores est compris dans une plage de 0,05 à 0,2 cm$^3$/g ; dans lequel une surface spécifique (BET) du matériau carboné solide contenant du fer (17) est comprise dans une plage de 10 à 50 m$^2$/g, la teneur en fer, le volume des micropores et des mésopores et la surface spécifique étant déterminés comme décrit dans la description.

2. Procédé selon la revendication 1, dans lequel le matériau carboné solide contenant du fer (17) est sous forme de poudre, et une taille moyenne de particules de celui-ci est comprise dans une plage de 10 à 100 μm, lorsqu'elle est déterminée comme décrit dans la description.

3. Procédé selon l'une quelconque des revendications 1 à 2, dans lequel l'étape a) comprend :

   la formation (i) d'un mélange gazeux (16) contenant de l'hydrogène et (ii) d'un matériau carboné solide contenant du fer (17) avec du carbone produit par pyrolyse combiné avec du fer dérivé du catalyseur à base de fer, en soumettant une charge d'alimentation contenant du méthane (11) à une pyrolyse en présence d'un catalyseur contenant du fer sous forme de particules solides ; et
   la séparation du matériau carboné solide contenant du fer (17) du mélange gazeux (16).

4. Procédé selon l'une quelconque des revendications précédentes, dans lequel l'étape a) comprend :

   a1) la formation d'un produit de pyrolyse comprenant du méthane n'ayant pas réagi, du carbone, de l'hydrogène et du monoxyde de carbone, par introduction d'une charge d'alimentation contenant du méthane (11) dans un réacteur de type four rotatif (A) conjointement avec un catalyseur contenant de l'oxyde de fer sous forme de particules solides ; et
   a2) la séparation, respectivement, d'un mélange gazeux (16) contenant du méthane n'ayant pas réagi, de l'hydrogène et du monoxyde de carbone, et d'un matériau carboné solide contenant du fer (17), à partir du produit de pyrolyse par séparation gaz-solide.

5. Procédé selon la revendication 4, dans lequel la charge d'alimentation contenant du méthane (11) et le catalyseur contenant de l'oxyde de fer sous forme de particules solides sont introduits dans le réacteur de type four rotatif (A) selon un mode d'écoulement à co-courant.

6. Procédé selon la revendication 4 ou 5, dans lequel le réacteur de type four rotatif (A) comprend :

   un tube configuré pour recevoir des particules solides et du gaz et pour être rotatif ;
   un dispositif de chauffage configuré pour fournir une chaleur contrôlée à un espace intérieur du tube ;
   une chicane hélicoïdale configurée pour s'étendre le long d'une surface circonférentielle intérieure du tube afin d'induire le déplacement vers l'avant, dans une direction longitudinale du tube, du catalyseur contenant de l'oxyde de fer introduit sous forme de particules solides, en fonction de la rotation du tube ; et
   au moins une aube de relevage prévue sur la surface circonférentielle intérieure du tube correspondant à au moins l'un des pas de la chicane hélicoïdale, afin de disperser dans le tube le catalyseur contenant de l'oxyde de fer introduit sous forme de particules solides.

7. Procédé selon la revendication 6, dans lequel ladite au moins une aube de relevage présente une forme droite et/ou une forme courbée.

8. Procédé selon l'une quelconque des revendications 4 à 7, dans lequel une vitesse de rotation du tube dans le réacteur de type four rotatif (A) est réglée dans une plage de 0,05 à 5 tr/min, et un temps de séjour du catalyseur contenant de l'oxyde de fer sous forme de particules solides est réglé dans une plage de 1 à 150 heures.

9. Procédé selon l'une quelconque des revendications précédentes, dans lequel :

   l'étape b) est réalisée par une technique de moulage choisie dans le groupe constitué du briquetage, de l'extrusion, du moulage par compression, de la mise en comprimés, de la pelletisation et de la granulation, et le produit moulé (26) présente au moins une forme choisie dans le groupe constitué d'une forme cylindrique, d'une forme granulaire, d'une forme de bille, d'une forme sphérique et d'une forme cubique.

10. Procédé selon l'une quelconque des revendications précédentes, dans lequel le matériau carboné solide contenant du fer (17) contient en outre au moins l'un du silicium ou de l'aluminium,

dans lequel le matériau carboné solide contenant du fer (17) présente une teneur en silicium de 0,8 % en poids ou moins,
et une teneur en aluminium de 2 % en poids ou moins, toutes étant déterminées comme décrit dans la description.

11. Procédé selon l'une quelconque des revendications précédentes, dans lequel le matériau carboné solide contenant du fer (17) présente une teneur totale en carbone d'au moins 80 % en poids et contient au moins 60 % en poids de carbone fixe, au plus 1 % en poids d'humidité, au plus 20 % en poids de matières volatiles et au plus 20 % en poids de cendres, tous étant déterminés comme décrit dans la description.

12. Agent de recarburation sous forme d'un produit moulé (26) comprenant un matériau carboné solide contenant du fer (17),

dans lequel le matériau carboné solide contenant du fer (17) comprend tous les éléments suivants : des micropores, des mésopores et des macropores ;
dans lequel un volume des micropores et des mésopores est compris dans une plage de 0,05 à 0,2 $cm^3$/g ;
dans lequel une surface spécifique (BET) du matériau carboné solide contenant du fer (17) est comprise dans une plage de 10 à 50 $m^2$/g ; et
dans lequel une teneur en fer dans le matériau carboné solide contenant du fer (17), sur une base élémentaire, est comprise dans une plage de 5 à 20 % en poids, le volume des micropores et des mésopores, la surface spécifique et la teneur en fer étant déterminés comme décrit dans la description.

13. Procédé d'élaboration de l'acier, comprenant :

la fourniture d'un métal fondu contenant du fer réglé à une température de 1400 à 1700 °C ; et
l'ajout de l'agent de recarburation selon la revendication 12 au métal fondu contenant du fer,
dans lequel l'agent de recarburation est ajouté en une quantité de 1 à 10 % en poids sur la base d'une quantité du métal fondu contenant du fer.

**Fig. 1**

100

**Fig. 2**

**Fig. 3 (b)**

Side view

Plan view

**Fig. 3 (a)**

Plan view

Front view

Side view

**Fig. 3 (c)**

Front view

# Fig. 4

Flow of Catalyst Particles ⟶

Rear Helical Surface

Front Helical Surface

Divided Catalyst Particles

0°

Lifter

180°

360°

540°

Fig. 5 (b)

P

Side view

Plan view

Fig. 5 (a)

Plan view

Front view

Side view

Fig. 5 (c)

h₁ h₂ ③

④ ②

①

Front view

**Fig. 6 (a)**

**Fig. 6 (b)**

**Fig. 6 (c)**

**Fig. 7**

Fig. 8

Fig. 9

**Fig. 10**

Fig. 11

Fig. 12

Fig. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20180113448
- EP 44882271 A1
- CN 116635329 A

**Non-patent literature cited in the description**

- *Int. J. Hydrogen Energy*, vol. 18 (3), 211-215